# EUROPEAN PATENT APPLICATION

(11) **EP 4 541 668 A1**
(43) Date of publication of application: **23.04.2025**
(21) Application number: 23838671.8
(22) Date of filing: 25.06.2023
(51) Int. Cl.: B60R 22/34

(54) **SAFETY BELT RETRACTOR**

(30) Priority: 15.07.2022 CN 202221817565 U
(71) Applicant: Autoliv Development AB, 44783 Vargarda (SE)
(72) Inventor: WEI, Kezhao, Shanghai 201807 (CN)
(74) Representative: Müller Verweyen
(86) International application number: PCT/CN2023/102027
(87) International publication number: WO 2024/012177

(57) **Abstract**

A safety belt retractor (100), including: a retractor frame (10); a rotating shaft (20), rotatably mounted in the retractor frame; a positioning rod seat (30), disposed outside the retractor frame and linked to the rotating shaft, a snap-fit portion (31) being disposed at an axial outer end of the positioning rod seat; a steel ball seat (40), pivotally connected to the outside of the retractor frame (10), the steel ball seat (40) being provided with a fan-shaped positioning gear (41); and a positioning rod (50), including a first end (51) and a second end (52), the first end being linked to the snap-fit portion of the positioning rod seat, the second end being used to engage with or disengage from the fan-shaped positioning gear of the steel ball seat, the first end being provided with a snap-fit ring (511), the snap-fit portion being provided with a slot (311), and, when the snap-fit ring is fitted into the snap-fit portion, the snap-fit portion being elastically deformed in a radial direction, so that the snap-fit ring is snapped and inserted into the slot and has an interference fit with the slot.

## Description

### TECHNICAL FIELD

The present utility model relates to the technical field of automobile parts, and relates in particular to a safety belt retractor.

### BACKGROUND

With the continuous development of the automobile market, and the rising popularity of automobiles in China, automobile safety performance has become an important factor for consumers to consider when buying an automobile. Also, each automobile manufacturer attaches more and more importance to the question of automobile safety. Automobile safety belts are apparatuses used in automobiles to ensure that passengers and drivers are prevented from being injured when the automobile body is hit violently, providing the functions of restraining displacement and cushioning.

In general, a safety belt is mounted on each front and rear seat of an automobile. When in use, the safety belt is pulled out from a safety belt retractor, passes through a safety belt guide plate (or a safety belt outlet), and is inserted into a buckle on the seat (or near the seat) using an insertion plate on the safety belt to fasten a passenger to the automobile seat.

In the related art, an inclination locking mechanism of a safety belt retractor in a seat is fixed, and a ball is provided therein. When the ball is subjected to an angle change, ratchet teeth are ejected, and once a ratchet wheel engages with the ratchet teeth, when a vehicle is inclined, or when a backrest is adjusted forward and backward and inclined to a certain angle, an inclination locking function is triggered, so that the safety belt retractor cannot smoothly release a safety belt. Alternatively, when the backrest is completely flipped forward, the safety belt cannot be drawn out, and the backrest cannot be returned to its original position. A latch must be released before the backrest can be returned to its original position. Therefore, the safety belt retractor is suitable only for a small range of adjustment of a movable backrest.

### SUMMARY

To overcome the problems existing in the related art, the present disclosure provides a safety belt retractor.

According to a first aspect of embodiments of the present disclosure, the present disclosure provides a safety belt retractor, comprising: a retractor frame; a rotating shaft, rotatably mounted in the retractor frame; a positioning rod seat, disposed outside the retractor frame and linked to the rotating shaft, a snap-fit portion being provided at an axial outer end of the positioning rod seat; a steel ball seat, pivotally connected to the outside of the retractor frame, the steel ball seat being provided with a fan-shaped positioning gear; and a positioning rod, comprising a first end and a second end, the first end being linked to the snap-fit portion of the positioning rod seat, the second end being used to engage with or disengage from the fan-shaped positioning gear of the steel ball seat, the first end being provided with a snap-fit ring, the snap-fit portion being provided with a slot, and the snap-fit ring being snapped and inserted into the slot and having an interference fit with the slot.

In some embodiments, the snap-fit ring is a closed ring, and when the snap-fit ring is fitted into the snap-fit portion in an axial direction, the snap-fit portion is elastically deformed in a radial direction, so that the snap-fit ring is snapped and inserted into the slot.

In some embodiments, the snap-fit ring is a non-closed ring having an opening, the opening allowing the snap-fit ring to be snapped and inserted into the slot along a radial direction.

In some embodiments, the snap-fit portion comprises a first flange and a second flange that are spaced apart in an axial direction, and the slot is formed between the first flange and the second flange; wherein the first flange extends toward an axial inner end at a radial edge to form a hook portion, the second flange extends toward an axial outer end at a radial edge to form a support portion, and the distance between the hook portion and the support portion in the axial direction is less than the thickness of the snap-fit ring.

**In** some embodiments, a plurality of first flanges are provided and arranged uniformly at equal intervals along a circumferential direction; and/or a plurality of second flanges are provided and arranged uniformly at equal intervals along the circumferential direction.

**In** some embodiments, the plurality of first flanges and the plurality of second flanges are staggered in the axial direction.

**In** some embodiments, the snap-fit portion is provided with a spacing groove between two first flanges, and the spacing groove extends axially from the first flanges to the slot.

**In** some embodiments, an outer surface of the first flange is provided with a first inclined surface; and/or an outer surface of the second flange is provided with a second inclined surface.

**In** some embodiments, a gear is further provided at an axial inner end of the positioning rod seat, the gear is integrally molded with the snap-fit portion, and the gear is linked to the rotating shaft.

**In** some embodiments, the positioning rod seat is made of a plastic material.

**In** some embodiments, the positioning rod is made of a metal material.

**In** some embodiments, the safety belt retractor further comprises: a locking disc, disposed outside the retractor frame and linked to the rotating shaft, external teeth being provided on an outer periphery of the locking disc; and the steel ball seat further comprises: a swinging rod assembly, pivotally connected to the steel ball seat, the swinging rod assembly being provided with a pawl, and a steel ball, located in a circular arc-shaped recess between the steel ball seat and the swinging rod assembly; wherein, when a vehicle is inclined, the steel ball hits the swinging rod assembly due to inertia, so that the swinging rod assembly rotates with respect to the steel ball seat, and the pawl engages with the external teeth so as to restrict rotation of the rotating shaft relative to the retractor frame.

The technical solutions provided in the embodiments of the present disclosure may achieve the following beneficial effects: by means of the snap-fit portion of the positioning rod seat being elastically deformed along the radial direction, so that the snap-fit ring of the positioning rod is snapped and inserted into the slot of the snap-fit portion and has an interference fit with the slot, not only are the number of assemblies that need to be assembled and the size of the space occupied reduced, but also the assembly process is simplified and the cost is reduced, while ensuring the strength of the connection between the positioning rod and the positioning rod seat.

### BRIEF DESCRIPTION OF THE DRAWINGS

The accompanying drawings, which are incorporated in and constitute a part of the present specification, illustrate embodiments consistent with the present disclosure, and are used to explain the principles of the present disclosure together with the specification.
FIG. 1 is a side view of a safety belt retractor shown according to an exemplary embodiment;
FIG. 2 is a cross-sectional view of position A-A in FIG. 1;
FIG. 3 is a schematic exploded view of the assembly of a positioning rod seat and a positioning rod according to a first embodiment;
FIG. 4 is a schematic perspective view of the assembly of the positioning rod seat and the positioning rod according to the first embodiment;
FIG. 5 is a structural perspective view of a positioning rod according to a second embodiment;
FIG. 6 is an enlarged schematic view of a second end of the positioning rod according to the second embodiment;
FIG. 7 is a partial structural perspective view of a safety belt retractor according to the second embodiment; and
FIG. 8 is a schematic perspective view of a position where a positioning rod seat and the positioning rod are assembled in FIG. 7.

### DETAILED DESCRIPTION

Exemplary embodiments are described in detail herein, and examples of the exemplary embodiments are presented in the accompanying drawings. When the following description refers to the accompanying drawings, unless otherwise specified, the same numerals in different accompanying drawings represent the same or similar elements. The implementations described in the following exemplary embodiments are not representative of all implementations consistent with the present disclosure. Instead, the implementations are merely examples of apparatuses and methods consistent with some aspects of the present disclosure as recited in the appended claims.

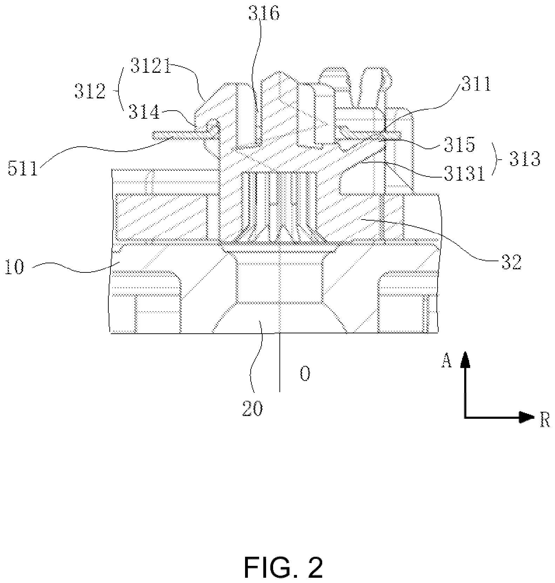

In the present invention, unless otherwise specified, axial direction, radial direction, and circumferential direction refer to the axial direction, the radial direction, and the circumferential direction of a safety belt retractor, respectively. An axial inner end refers to the lower side in FIG. 2, and an axial outer end refers to the upper side in FIG. 2. A radial outer side refers to the side radially distant from the central axis O in FIG. 2, and a radial inner side refers to the side radially close to the central axis O. In addition, the term "linked" means that a driving force/torque can be transmitted between two components, and the two components may be directly connected to each other, or may be connected to each other by means of various transmission mechanisms or connection structures, so as to achieve the described function.

To solve the described technical problems, the present disclosure provides a safety belt retractor 100, including: a retractor frame 10, a rotating shaft 20, a positioning rod seat 30, a steel ball seat 40, a positioning rod 50, a steel ball, and a locking disc.

The rotating shaft 20 is rotatably mounted in the retractor frame 10, and the rotating shaft 20 is used for winding up a safety belt body. When the safety belt body is drawn out of the retractor frame 10 or retracted into the retractor frame 10, the safety belt body drives the rotating shaft 20 to rotate.

**The** locking disc is disposed outside one axial end of the retractor frame 10, and the locking disc is disposed outside the retractor frame 10 and linked to the rotating shaft 20, external teeth being provided on an outer periphery of the locking disc. **The** term "linked" means that a driving force/torque can be transmitted between two components, and the two components may be directly connected to each other, or may be connected to each other by means of various transmission mechanisms or connection structures, so as to achieve the described function.

Further, the steel ball seat 40 is pivotally connected to the outside of the retractor frame 10 by means of a pivot shaft, rotates relative to the retractor frame 10, and is located on the same side as the locking disc. **The** steel ball seat 40 includes a swinging rod assembly and a steel ball (not shown in the figures).

One end of the swinging rod assembly is pivotally connected to the steel ball seat 40, and the other end of the swinging rod assembly is provided with a pawl. **The** steel ball is located in a circular arc-shaped recess between the steel ball seat 40 and the swinging rod assembly. When a vehicle is inclined, the steel ball hits the swinging rod assembly due to inertia, so that one end of the swinging rod assembly rotates relative to the steel ball seat 40, and the pawl at the other end of the swinging rod assembly is driven to swing and engage with the external teeth of the locking disc, causing the locking disc to stop rotating. Since the locking disc is linked to the rotating shaft 20, the rotation of the rotating shaft 20 relative to the retractor frame 10 is restricted, so as to lock the drawing out action of the safety belt retractor.

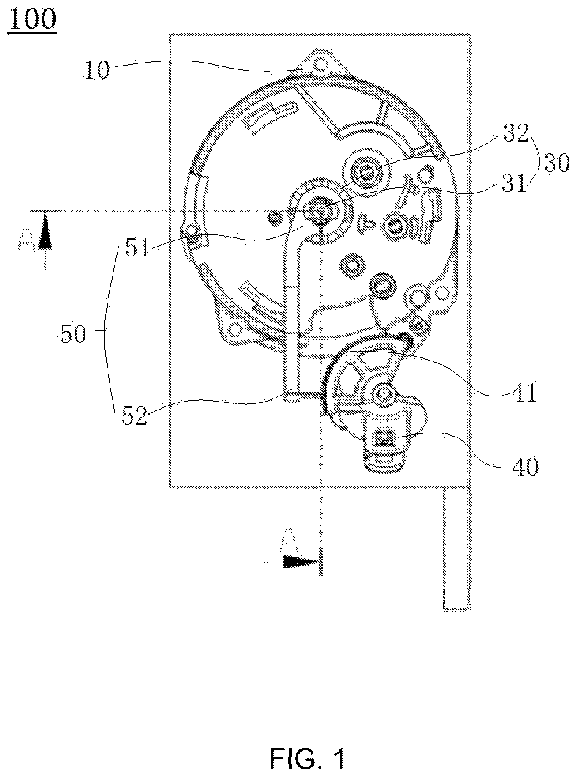

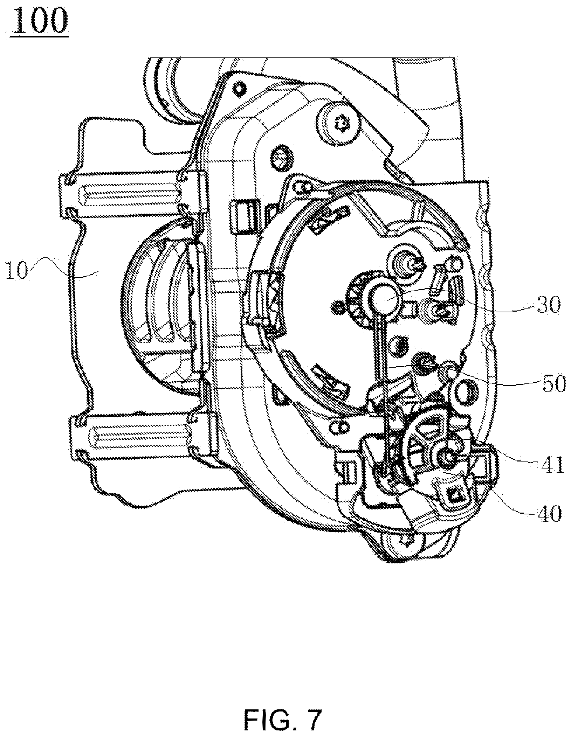

As shown in FIGS. 1, 2, and 7, the positioning rod seat 30 is disposed outside the retractor frame 10 and linked to the rotating shaft 20. An axial outer end of the positioning rod seat 30 is provided with a snap-fit portion 31, and an axial inner end of the positioning rod seat 30 is provided with a gear 32. The gear 32 may be integrally molded with the snap-fit portion 31, and the gear 32 is linked to the rotating shaft 20, so that the rotating shaft 20 can drive the rotation of the positioning rod seat 30 by means of the gear 32, achieving linkage of the positioning rod seat 30 to the rotating shaft 20.

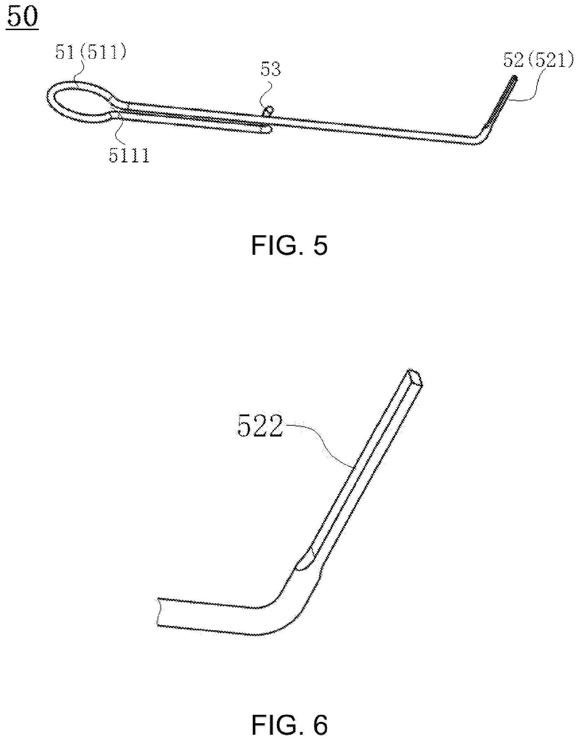

The present disclosure illustratively shows two embodiments, a first embodiment as shown in FIGS. 1 to 4, and a second embodiment as shown in FIGS. 5 to 8. In both the first embodiment and the second embodiment, the steel ball seat 40 is provided with an extending fan-shaped positioning gear 41. The positioning rod 50 includes a first end 51 and a second end 52, the first end 51 being linked to the snap-fit portion 31 of the positioning rod seat 30, and the second end 52 being used to engage with or disengage from the fan-shaped positioning gear 41 of the steel ball seat 40.

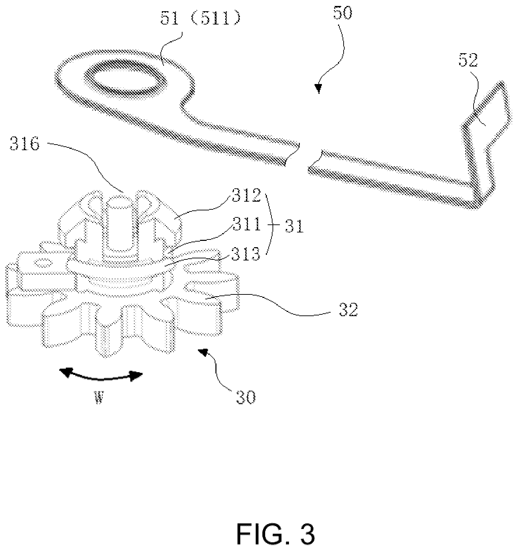

In the first embodiment, as shown in FIG. 3, the first end 51 of the positioning rod 50 is provided with a ring-like and annularly closed snap-fit ring 511, the snap-fit portion 31 of the positioning rod seat 30 is provided with an annular slot 311 arranged along a circumferential direction, and the inner diameter of the snap-fit ring 511 is smaller than the minimum outer diameter of the snap-fit portion 31. Therefore, when the snap-fit ring 511 is fitted into the snap-fit portion 31, the snap-fit portion 31 needs to be elastically deformed along a radial direction so that the snap-fit ring 511 can be snapped and inserted into the slot 311 and have an interference fit with the slot 311.

Thus, when the rotating shaft 20 drives the snap-fit portion 31 of the positioning rod seat 30 to rotate by means of the gear 32 of the positioning rod seat 30, the snap-fit portion 31 has an interference fit with the snap-fit ring 511, enabling the positioning rod 50 to be rotated according to the rotation direction (including clockwise and counterclockwise) of the rotating shaft 20, so as to achieve engagement or disengagement of the second end 52 of the positioning rod 50 with or from the fan-shaped positioning gear 41.

When the safety belt body is drawn out, the safety belt body drives the rotating shaft 20 to rotate counterclockwise, and the counterclockwise rotation of the rotating shaft 20 drives the positioning rod 50 to rotate counterclockwise, so that the second end 52 of the positioning rod 50 engages with the fan-shaped positioning gear 41 to fix the steel ball seat 40.

When the safety belt body is retracted, the rotating shaft 20 is driven to rotate clockwise, and the clockwise rotation of the rotating shaft 20 drives the positioning rod 50 to rotate clockwise, so that the second end 52 of the positioning rod 50 moves away from the fan-shaped positioning gear 41 until the positioning rod 50 reaches the position of a limiting column (not shown in the figure) and stops. After the positioning rod 50 stops, if the rotating shaft 20 continues to rotate, the first end 51 of the positioning rod 50 slips with the slot 311 of the snap-fit portion 31 of the positioning rod seat 30, so that the positioning rod 50 is held at its original position.

The snap-fit portion 31 may undergo elastic deformation in a radial direction R. In a first aspect, after the snap-fit ring 511 of the positioning rod 50 is snapped in the slot 311, the snap-fit portion 31 rebounds, which can effectively prevent the snap-fit ring 511 from slipping out of the slot 311. In a second aspect, the snap-fit portion 31 is elastically deformed in the radial direction R, so that the dimensions of the snap-fit ring 511 of the positioning rod 50 and the snap-fit portion 31 of the positioning rod seat 30 in the radial direction R can be reduced at the same time, thereby reducing the space occupied by the snap-fit portion 31 and the snap-fit ring 511, to avoid interference with other parts and components. In a third aspect, the positioning rod 50 and the positioning rod seat 30 are directly fitted to each other while ensuring pre-tightening force, which facilitates assembly and saves parts and costs.

**In** some embodiments, the positioning rod seat 30 is made of a plastic material. **In** some embodiments, the positioning rod 50 is made of a metal material. A positioning rod 50 made of a metal material has high strength, which prevents the second end 52 of the positioning rod 50 from breaking and failing during the process of engagement with the fan-shaped positioning gear 41.

Further, as shown in FIGS. 2 to 4, the snap-fit portion 31 of the positioning rod seat 30 includes a first flange 312 and a second flange 313 spaced apart from each other in an axial direction A, and the slot 311 described above is formed between the first flange 312 and the second flange 313.

**The** first flange 312 extends along an axial inner end at an edge in the radial direction R to form a hook portion 314, the second flange 313 extends along an axial outer end at an edge in the radial direction R to form a support portion 315, and the distance between the hook portion 314 and the support portion 315 in the axial direction A is less than the thickness of the snap-fit ring 511.

Thus, when the snap-fit ring 511 of the positioning rod 50 according to the first embodiment is snapped into the slot 311, the hook portion 314 and the support portion 315 can clamp the snap-fit ring 511 in the axial direction A, so as to restrict the movement of the snap-fit ring 511 in the axial direction A and increase the pre-tightening force between the snap-fit portion 31 and the snap-fit ring 511. At the same time, as can be seen from the above content, the interference fit between the snap-fit ring 511 and the slot 311 cooperates with the pre-tightening force between the snap-fit portion 31 and the snap-fit ring 511, so that the snap-fit ring 511 of the positioning rod 50 and the snap-fit portion 31 of the positioning rod seat 30 are more firmly engaged with each other, thereby avoiding slipping failure.

Further, a plurality of first flanges 312 are provided and arranged uniformly at equal intervals along a circumferential direction W, and/or a plurality of second flanges 313 are provided and arranged uniformly at equal intervals along the circumferential direction W. Moreover, the plurality of first flanges 312 and the plurality of second flanges 313 are staggered in the axial direction A, that is, one second flange 313 is provided between two first flanges 312, or one first flange 312 is provided between two second flanges 313.

Both the first flanges 312 and the second flanges 313 are arranged at equal intervals along the circumferential direction W, and the number of first flanges 312 is the same as the number of second flanges 313. Thus, the first flanges 312 and the second flanges 313 apply the same pre-tightening force to two sides of the snap-fit ring 511, thereby preventing the snap-fit ring 511 from bending and deforming due to uneven force.

In an embodiment of the present disclosure, as shown in FIGS. 2 to 4, two first flanges 312 are provided, two second flanges 313 are provided, and the two first flanges 312 and the two second flanges 313 are staggered in the axial direction A.

In some embodiments, as shown in FIG. 3, the snap-fit portion 31 is provided with a spacing groove 316 between the two first flanges 312, the spacing groove 316 extending in the axial direction A from the first flanges 312 to the slot 311.

Thus, when the snap-fit ring 511 is fitted into the first flanges 312, the spacing groove 316 can provide a space for the first flanges 312 to move toward the central axis of the rotating shaft 20, so that the snap-fit ring 511 passes over the first flanges 312 and then snaps into the slot 311. After that, the first flanges 312 return, and the hook portion 314 of each first flange 312 prevents the snap-fit ring 511 from coming off. By means of providing a spacing groove 316, the snap-fit portion 31 may be made of plastic having high strength, high resistance to aging, high resistance to wear, and high resistance to deformation, so that the snap-fit portion 31 can be elastically deformed in the radial direction R while maintaining sufficient strength.

In some embodiments, the outer surface of the first flange 312 is provided with a first inclined surface 3121, and/or the outer surface of the second flange 313 is provided with a second inclined surface 3131.

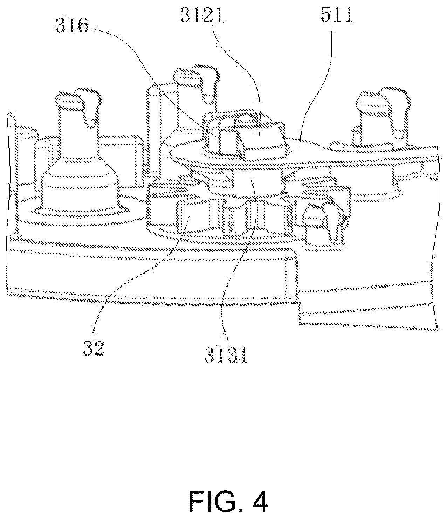

As shown in FIGS. 2 to 4, the first inclined surface 3121 is inclined from top to bottom, and the first inclined surface 3121 is equivalent to a chamfer, so as to facilitate introduction of the snap-fit ring 511 into the first flange 312 of the snap-fit portion 31, and also prevent the snap-fit ring 511 from wearing the edge of the snap-fit portion 31. The second inclined surface 3131 is inclined from bottom to top, and the second inclined surface 3131 can prevent the second flange 313 from interfering with the gear 32 and save machining raw materials (as shown in FIG. 4), thereby reducing costs.

In the second embodiment, as shown in FIGS. 5 to 8, the positioning rod 50 also includes a first end 51 and a second end 52, the first end 51 of the positioning rod 50 being provided with a snap-fit ring 511 having an annular shape, and the snap-fit ring 511 being used to be snapped and inserted into the annular slot 311 at the snap-fit portion 31 of the positioning rod seat 30 and to have an interference fit with the slot 311. The second end 52 of the positioning rod 50 is provided with a hook-like engaging hook 521, the engaging hook 521 being used to engage into the fan-shaped positioning gear 41, to fix the steel ball seat 40.

In the second embodiment, the structure of the positioning rod 50 is different from that of the positioning rod 50 in the first embodiment.

Specifically, as shown in FIG. 5, the snap-fit ring 511 in the second embodiment is not a closed-ring annular structure. In the second embodiment, the positioning rod 50 is formed by bending a metal rod. One end of the metal rod is bent vertically to form the engaging hook 521 of the positioning rod 50, the middle portion of the metal rod is bent in a ring shape to form the snap-fit ring 511 having an opening 5111, and the other end of the metal rod extends toward the engaging hook 521, and is bent to form a fixing hook 53. The fixing hook 53 is hooked on a rod body of the metal rod.

When the snap-fit ring 511 having the non-closed-ring structure is connected to the snap-fit portion 31, the fixing hook 53 is temporarily not hooked on the rod body of the metal rod, the snap-fit ring 511 is snapped in the slot 311 of the snap-fit portion 30 along the radial direction R through the opening 5111, and then the fixing hook 53 is hooked on the rod body of the metal rod.

Thus, the structure of the positioning rod 50 is simple, the manufacturing process is less difficult and less costly, and the installation process of the positioning rod 50 and the positioning rod seat 30 is simpler.

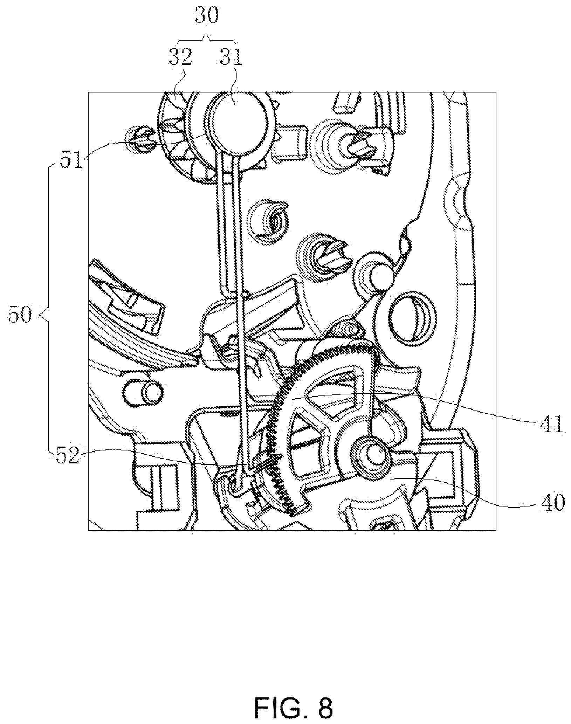

As can be seen from the above, the snap-fit ring 511 in the second embodiment does not need to be axially fitted into the slot 311 from the first flange 312 of the snap-fit portion 31, as with the snap-fit ring 511 in the first embodiment, and the first flange 312 does not need to be elastically deformed in the radial direction. Therefore, in the second embodiment, the structure of the snap-fit portion 31 of the corresponding positioning rod seat 30 may also be different. As shown in FIG. 8, the snap-fit portion 31 is no longer provided with the first flange 312 and the second flange 313 of the first embodiment, and the snap-fit portion 31 directly forms an annular slot 311. Thus, the structure and the machining process of the snap-fit portion 31 of the positioning rod seat 30 are also simpler.

Further, as shown in FIG. 6, the engaging hook 521 of the second end 52 of the positioning rod 50 has two parallel hook flat surfaces 522, and the hook flat surfaces 522 make the second end 52 flat, thereby further facilitating engagement with the fan-shaped positioning gear 41, and preventing slipping off.

It can be understood that in the present disclosure, "a plurality of" means two or more, and other quantifiers are similar. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. The singular forms "a" and "the" are also intended to include plural forms, unless otherwise specified in the context clearly.

It may be further understood that the terms "first", "second", etc., are used to describe various structures, but these structures should not be limited by these terms. These terms are only used to distinguish between structures of the same type, and do not indicate a particular order or degree of importance. In practice, the terms "first", "second", etc., are used interchangeably. For example, without departing from the scope of the present disclosure, a first structure may also be referred to as a second structure, and similarly, a second structure may also be referred to as a first structure.

It can be further understood that an orientation or positional relationship indicated by terms such as "center", "longitudinal", "lateral", "front", "back", "up", "down", "left", "right", "vertical", "horizontal", "top", "bottom", "inside", and "outside" is based on the orientation or positional relationship shown in the accompanying drawings, and is only for the convenience of describing the embodiments and simplifying the description, rather than indicating or implying that an apparatus or an element indicated must have a particular orientation, or be constructed and operated in a particular orientation.

It can be further understood that unless otherwise specified, "connection" includes a direct connection between two units without other components and an indirect connection between two units with other elements.

It can be further understood that although operations in the embodiments of the present disclosure are described in a particular order in the accompanying drawings, it should not be construed as requiring these operations to be performed in the particular order shown or in a sequential order, or requiring all the operations shown to be performed to achieve desirable results. In particular environments, multitask processing and parallel processing may be advantageous.

A person skilled in the art can easily figure out other implementations of the present disclosure after thinking over the specification and practicing the invention disclosed herein. **The** present application is intended to cover any variations, uses, or adaptive changes of the present disclosure, and these variations, uses, or adaptive changes follow the general principles of the present disclosure and include common knowledge or conventional technical means in the technical field that are not disclosed in the present disclosure. **The** specification and the embodiments are to be regarded as exemplary only, and the actual scope and spirit of the present disclosure are pointed out by the following claims.

It should be understood that the present disclosure is not limited to the precise structures that have been described above and shown in the accompanying drawings, and various modifications and changes can be made without departing from the scope of the present disclosure. The scope of the present disclosure is limited by the appended claims only.

## Claims

1. A safety belt retractor (100), **characterized by** comprising:
a retractor frame (10);
a rotating shaft (20), rotatably mounted in the retractor frame (10);
a positioning rod seat (30), disposed outside the retractor frame (10) and linked to the rotating shaft (20), a snap-fit portion (31) being disposed at an axial outer end of the positioning rod seat (30);
a steel ball seat (40), pivotally connected to the outside of the retractor frame (10), the steel ball seat (40) being provided with a fan-shaped positioning gear (41); and
a positioning rod (50), comprising a first end (51) and a second end (52), the first end (51) being linked to the snap-fit portion (31) of the positioning rod seat (30), and the second end (52) being used to engage with or disengage from the fan-shaped positioning gear (32) of the steel ball seat (40);
wherein the first end (51) is provided with a snap-fit ring (511), the snap-fit portion (31) is provided with a slot (311), and the snap-fit ring (511) is snapped and inserted into the slot (311) and has an interference fit with the slot (311).

2. **The** safety belt retractor (100) according to claim 1, wherein
the snap-fit ring (511) is a closed ring, and when the snap-fit ring (511) is fitted into the snap-fit portion (31) along an axial direction, the snap-fit portion (31) is elastically deformed along a radial direction (R), so that the snap-fit ring (511) is snapped and inserted into the slot (311).

3. **The** safety belt retractor (100) according to claim 1, wherein
the snap-fit ring (511) is a non-closed ring having an opening (5111), the opening (5111) allowing the snap-fit ring (511) to be snapped and inserted into the slot (311) along a radial direction.

4. **The** safety belt retractor (100) according to claim 2 or 3, wherein
the snap-fit portion (31) comprises a first flange (312) and a second flange (313) that are spaced apart in an axial direction (A), and the slot (311) is formed between the first flange (312) and the second flange (313);
wherein the first flange (312) extends toward an axial inner end at a radial edge to form a hook portion (314), the second flange (313) extends toward an axial outer end at a radial edge to form a support portion (315), and the distance between the hook portion (314) and the support portion (315) in the axial direction (A) is less than the thickness of the snap-fit ring (511).

5. **The** safety belt retractor (100) according to claim 4, wherein
a plurality of first flanges (312) are provided and arranged uniformly at equal intervals along a circumferential direction (W); and/or
a plurality of second flanges (313) are provided and arranged uniformly at equal intervals along the circumferential direction (W).

6. **The** safety belt retractor (100) according to claim 5, wherein
the plurality of first flanges (312) and the plurality of second flanges (313) are staggered in the axial direction (A).

7. **The** safety belt retractor (100) according to claim 5, wherein
the snap-fit portion (31) is provided with a spacing groove (316) between two first flanges (312), and the spacing groove (316) extends from the first flanges (312) to the slot (311) along the axial direction (A).

8. **The** safety belt retractor (100) according to claim 4, wherein
an outer surface of the first flange (312) is provided with a first inclined surface (3121); and/or
an outer surface of the second flange (313) is provided with a second inclined surface (3131).

9. **The** safety belt retractor (100) according to claim 1, wherein
a gear (32) is further provided at an axial inner end of the positioning rod seat (30), the gear (32) is integrally molded with the snap-fit portion (31), and the gear (32) is linked to the rotating shaft (20).

10. **The** safety belt retractor (100) according to claim 1, wherein
the positioning rod seat (30) is made of a plastic material.

11. **The** safety belt retractor (100) according to claim 1, wherein
the positioning rod (50) is made of a metal material.

12. **The** safety belt retractor (100) according to claim 1, further comprising:
a locking disc, disposed outside the retractor frame (10) and linked to the rotating shaft (20), external teeth being provided on an outer periphery of the locking disc; and
the steel ball seat (40) further comprising:
a swinging rod assembly, pivotally connected to the steel ball seat (40), the swinging rod assembly being provided with a pawl,
and a steel ball, located in a circular arc-shaped recess between the steel ball seat (40) and the swinging rod assembly;
wherein when a vehicle is inclined, the steel ball hits the swinging rod assembly due to inertia, so that the swinging rod assembly rotates relative to the steel ball seat (40), and the pawl engages with the external teeth to restrict rotation of the rotating shaft (20) relative to the retractor frame (10).
